# EUROPEAN PATENT APPLICATION

(11) **EP 4 811 189 A1**
(43) Date of publication of application: **23.09.2026**
(21) Application number: 25305354.0
(22) Date of filing: 17.03.2025
(51) Int. Cl.: G06F 21/45, G06Q 20/02, G06Q 20/32, G06Q 20/36

(54) **METHOD FOR ENFORCING THE USAGE OF A CREDENTIAL BY A WALLET**

(71) Applicant: THALES DIS FRANCE SAS, 92190 Meudon (FR)
(72) Inventor: SADAGOPAN, Sridharan, 680274 Singapore (SG); FAHER, Mourad, 78160 Marly le Roi (FR); AUNG, Khaing Phyo, 689685 Singapore (SG); CHIN, Xin Yee, 120708 Singapore (SG)
(74) Representative: Quintero Romero, Manuel

(57) **Abstract**

A method for enforcing the usage of a credential by a wallet is provided, wherein the credential is stored in the wallet and comprises embedded logic self-asserting its usage, wherein the method comprises:
• receiving, by the wallet, an attribute request indicating at least one attribute type and action to be performed by the wallet;
• retrieving, by the wallet, at least one attribute stored in the credential, and getting the associated embedded logic,
• inputting, by the wallet, at least part of the attribute request and the embedded logic to an action logic engine of the wallet, the action logic engine determining if the at least one attribute stored in the credential can be used in response to the attribute request; and
• if action is granted by the action logic engine, performing, by the wallet, the requested action with the requested attribute.

## Description

### TECHNICAL FIELD

This invention relates to the technical field of digital credentials and associated attributes, and, particularly, to multi-type credential wallets intended to store identity-related credentials and non-identity credentials such as payment cards or car keys.

In advantageous embodiments, the invention proposes credentials with embedded logic that self-asserts how they should be used thus moving away from hardcoded logics in classical wallets.

### BACKGROUND OF THE INVENTION

An *attribute* refers to any characteristic that is proper to a given person (either natural or legal). The attributes are typically issued by an issuing authority (e.g., governments or institutions), that enable person's authentication (e.g., given name, surname, address, citizenship, birthdate, age, etc.) or proves he/she has certain claims e.g., education qualifications, driver license status, etc. Such personal attributes are usually written on physical credentials, such as an ID card or passport but, with the emergence of online services, and seeking user-friendliness, these attributes tend to be further represented in a digital form and securely stored in digital wallets.

In short, the *issuer* (e.g., still governments or institutions) asserts certain attributes about the wallet's *holder,* thus creating a *credential* containing these claims, and transmits / issues the verifiable credential to the holder, which securely stores it in its *wallet.* When the holder wishes to selectively disclose his/her attributes to a *verifier,* it generates a *Presentation* (similar schema than the credentials) that the verifier can validate.

Despite the above well-established ecosystem, the particulars about how to encode and transmit the data, process requests, or verify information depends on the specific format chosen. Among all the existing ones, ISO/IEC 18013-5 specification and W3C's Verifiable Credentials Data Model v2.0 specification are widely used today, each defining a different attribute schema (i.e., structure, logical organization, type and namespace(s) of the attested attributes), data format (i.e., the way data is formatted in the credentials) and proof mechanisms (i.e., how to attest credentials for integrity and authenticity).

These digital wallets have evolved beyond simple identity tools to become comprehensive credential management systems. They now tend to aggregate the pre-existing payment cards or tokens, and the upcoming car (or door) keys in a single place.

Historically, the wallets handled the different credentials based on hardcoded *action logics* that refer to the rules and decision-making processes that govern how credentials function within the wallet. These built-in behaviours determine what can be done with the credentials, when, and how.

However, not all the credentials in the wallets are just identity documents to present, and the associated possible actions to be performed with them are exponentially growing. For instance, car key credentials can unlock cars, but also start the engine, prove its ownership, etc. Therefore, inventors have found that hardcoding the action logics for every credential type in the wallet limits addressing new use cases and is less flexible to evolve.

This integration of diverse credentials into a single secure management system, e.g., the wallet application, represents one of the most sophisticated security challenges in consumer technology, balancing security, privacy, and convenience through carefully design action logic unique to each credential type.

### SUMMARY OF THE INVENTION

The present invention provides a solution for all the aforementioned problems by a method for enforcing the usage of a credential by a wallet according to claim 1, a wallet application according to claim 6, and a credential according to claim 7. In dependent claims, preferred embodiments of the invention are defined.

In a first inventive aspect, the invention provides a method for enforcing the usage of a credential by a wallet, wherein the credential is stored in the wallet and comprises embedded logic self-asserting its usage. The method comprises the following steps:
- receiving, by the wallet, an attribute request indicating at least one attribute type and action to be performed by the wallet;
- retrieving, by the wallet, at least one attribute stored in the credential, and getting the associated embedded logic,

- inputting, by the wallet, at least part of the attribute request and the embedded logic to an action logic engine of the wallet, the action logic engine determining if the at least one attribute stored in the credential can be used in response to the attribute request; and
- if action is granted by the action logic engine, performing, by the wallet, the requested action with the requested attribute.

Throughout the description, a *credential* should be understood as a cryptographically secured digital representation of attributes, entitlements, or capabilities issued by an authority, that can be securely stored in a digital wallet, and can be verified without requiring direct interaction with the issuer at the time of verification. They all serve as trusted digital proxies that allow the holder to prove something about themselves - their identity, their payment authority, their access rights - through a secure digital interaction. A credential according to the invention encompasses: identity-related credentials (e.g., W3C's VCs, ISO mDL) and non-identity-related credentials (e.g., car keys, and wallet-hosted payment cards).

Advantageously, embedding the logic into the credential itself rather than foreseeing every possible action doable with the stored credentials and setup the wallet accordingly, enables the wallet to successfully handle various credential-specific actions and to support different use cases without having to hardcode the associated logic. It allows addressing evolving scenarios and new credential types without re-engineering the wallet application.

By attaching/embedding the action logic into the credential data itself, it becomes active and can participate in its rightful usage, thus performing validations, transformations, or mapping of its data.

There are examples of the industry where the issuer can place its "terms of use" of a specific credential, or where the wallet's holder places his/her "terms of use" inside a verifiable presentation, see e.g., in W3C's VC Data Model v2.0. However, this *termOfUse* property is a static literal representation of constraints that either the issuer or the holder wants to apply to the shared credential and that are plainly communicated to the verifier, who is supposed to abide by its rules.

The fact of letting the issuer embed the logics into the credential itself before its onboarding to be afterwards enforced by the wallet's action logic engine indeed foster the development of secure, privacy-preserving, and convenient multi-type credential wallet technology. In a preferred embodiment, the wallet is a multi-type credential wallet able to store identity-related credentials and non-identity credentials such as payment cards and car keys.

In a preferred embodiment, the embedded logic of the credential is set, and signed, by the credential issuer before onboarding into the wallet.

In a particular embodiment, the embedded logic of the credential is a wide embedded logic self-asserting its usage at credential level, and the credential further comprises sub-logics at attribute level; the action logic engine being configured to interpret the wide embedded logic and the attributes-specific sub-logic against an attribute request.

In a particular embodiment, the embedded logic, or the attribute-specific sub-logic, at least defines:
- the supported protocols such as ISO mDL, W3C Verifiable Credential, etc., or
- the supported transmission technologies such as Bluetooth Low Energy (BLE), Ultra-WideBand (UWB), or Near-Field Communication (NFC), etc., or
- the supported action: authentication, attribute presentation, transaction signing, unlock a door, start engine, etc.

As an example, as per today's situation, car keys supporting Car Connectivity Consortium (CCC) spec. can be used through NFC, BLE and UWB; whereas current identity standards support NFC, BLE, QR codes, etc.

In a second inventive aspect, the invention provides a wallet application installable into a host computer and configured to in turn store at least one credential, wherein the wallet comprises both a generic application logic setting generic rules such as how to access, retrieve, or transform the attribute credentials, and an action logic engine to enforce the embedded logic of the stored credentials upon receiving attribute requests.

The wallet may be embodied, preferably, as a user device such as a smartphone, a desk computer, a laptop, a touchpad, a personal digital assistant, or any other device having adequate processing capabilities and communication interfaces, such as described hereafter, storing or including a digital wallet (either software or hardware). The digital wallet may be an application locally stored on the user device or remotely accessed (e.g., web-browser based application) by the user device. In an embodiment, the digital wallet is associated with, or include in, a digital safe, a secure enclave or a secure element, SE. The data stored in the e.g., digital safe can only be accessed, read and write, by the digital wallet, so that other applications cannot access this data without requesting access to the digital wallet.

In a preferred embodiment, the wallet is a multi-type credential wallet able to store identity-related credentials and non-identity credentials such as payment cards and car keys. The wallet can preferably support ISO/IEC 18013-5 specification, W3C's Verifiable Credentials Data Model v2.0, Car Connectivity Consortium (CCC) spec., EMV-related specs., 3-D Secure (3DS) protocols, and others standard formats.

In a third inventive aspect, the invention provides a credential to be stored in a wallet application, and usable in the method of the first inventive aspect, wherein the credential comprises embedded logic self-asserting its usage set, and signed, by the credential issuer before being onboarded into the wallet.

A credential according to the invention comprises:
(1) structured data assertions about a subject (e.g., identity attributes, payment authorization in a payment card, access rights in a car key, educational achievements),
(2) cryptographic proof material (e.g., certificates and digital signatures created with the issuer's private key),
(3) trust framework establishing the authority of the issuer and the validity of the credential (e.g., certificate chains, DIDs, banking placeholders or tokens, and other keys), and
(4) embedded logic self-asserting how it needs to be used.

For exemplary purposes, in a simplified and generic manner, it will be considered that a credential comprises: attested data, cryptographic secret (e.g., key(s)), certificate attested by issuer, and embedded logic. A way to see the convergence of car keys towards identity credentials is considering that the car key is an attribute for device/machine/car identity.

In a particular embodiment, the embedded logic is a wide embedded logic self-asserting its usage at credential level, and further comprising sub-logics at attribute level.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: shows the evolution from physical cards, to single-type credential wallet apps, to multi-type credential wallets.
- Fig. 2: shows a schematic representation of the logic compilation during issuance and the resulting credential according to some embodiments of the invention.
- Fig. 3: shows a schematic representation of the wallet's workflow during presentation, according to some embodiments of the invention.

### DETAILED DESCRIPTION OF THE INVENTION

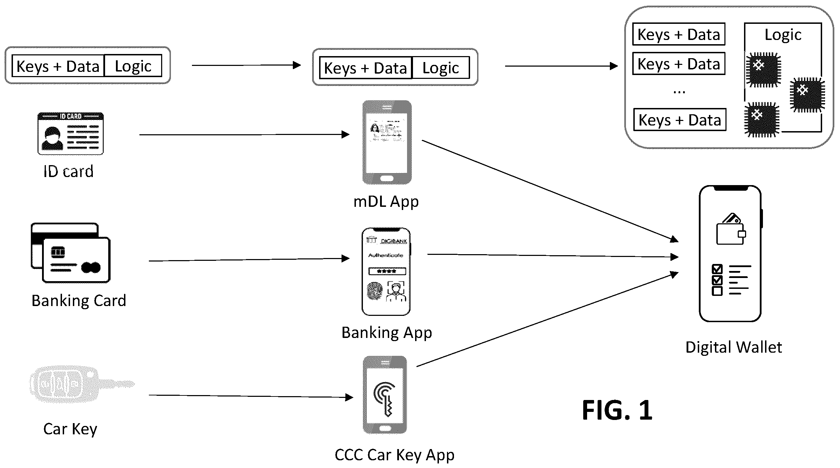

In **figure 1****,** it is depicted the industry evolution from physical cards, to use-specific apps, to multi-type credential wallets. Given their constrained development environment, typically regulated and standardised, physical cards and specific apps are credentials integrating the logic that control their usage. However, generic wallets need to be prepared to encompass diverse use cases and even evolve towards new credential types, rendering no well-defined method to manage the logic of the onboarded credentials.

As an example, these credentials can be formatted as per ISO/IEC 18013-5 specification (i.e., mDL doc), W3C's Verifiable Credentials Data Model v2.0 (i.e., VC), Car Connectivity Consortium (CCC) spec., EMV-related specs., etc.

Today, wallets developers need to hardcode the plausible actions the wallet holders may wish to undertake with its credentials or, more often, implement the policy documents distributed by each of the Standard-Setting Organizations of the wallet's supported standards. Since standards evolve, wallet developers frequently patch the platforms to be compliant with the latest technology updates.

Sometimes, these hardcoded rules align in certain aspects, but there is never 100% matching. For instance, the ISO/IEC 18013-5 standard (i.e., mDL) takes a highly structured approach, while W3C's VC approach provides more flexibility in its implementation. In mDL, the wallet for instance contains hardcoded categories of information known as data groups, which include personal details, user privileges, and document metadata. Fixed derivation rules handle transformations like converting birth dates to age verification booleans without revealing actual birth information. The transport protocol hierarchy defines precise rules for selecting between NFC, BLE, and QR communication methods based on e.g., availability and security preferences. On the other hand, in W3C's VC implementations, the proof generation supports for instance various cryptographic proof formats including JSON Web Signatures, BBS+ signatures for advanced selective disclosure, and linked data proofs.

Regarding payment cards, the wallet never stores the actual card number. Instead, through a process called tokenization, the real card details are replaced with a secure token that only works on the specific wallet. Then, during a transaction, the wallet creates a one-time dynamic security code for each purchase rather than using the static CVV on the physical card. The wallet's payment logic then needs to include specific rules for different contexts: for in-store purchases, it activates only when near an NFC terminal and requires biometric authentication, while for in-app purchases, it follows different authentication protocols while still maintaining security.

Digital car keys represent a newer addition to multi-credential wallets with their own unique implementation. Modern digital car keys use e.g., Ultra-Wideband (UWB) or Bluetooth Low Energy (BLE) technology to enable precise location awareness. This allows the car to detect exactly when the owner approaches, creating a seamless experience where the car unlocks as you near it. The provisioning process involves a secure handshake between the car manufacturer's backend, the vehicle, and the wallet. The car generates a unique cryptographic key that is securely transmitted to your wallet's secure element.

The present invention provides a method for enforcing the usage of a credential by a wallet that is based on 2 main components: on one hand, the fact that credential itself embed the logic that self-asserts its envisaged usage, and, on the other hand, the fact that the wallet comprises an action logic engine configured to receive the attribute request and the embedded logic outputting a granting / denying message. In a particular embodiment, this message can be an automatic resume / block of the regular workflow.

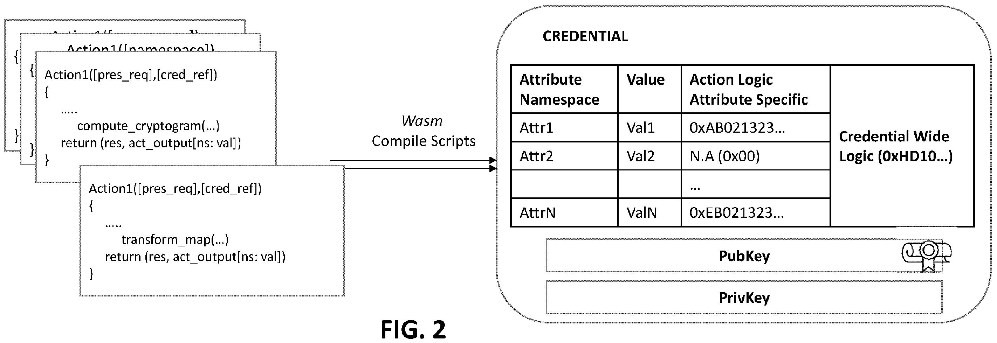

Regarding the credential formatting (see **figure 2****),** each credential embeds the plausible actions in the form of action logic scripts along with the attested attributes or claims. During issuance, the issuer issues (or refreshes) the credential in a standard manner further including the issuer-defined action scripts to the attested claims. As part issuance process, the issuer compiles the action logic(s) to bytecodes (e.g., using WebAssembly) and embeds them into the credential. Subsequently, the issuer signs the proof and/or certificates covering the logic(s) as well.

The embedded logic of the credential is 2-fold:
- a wide embedded logic self-asserting its usage at credential level, and
- sub-logics at attribute level.

The credential-level wide embedded logic is configured to address scenarios (e.g., validating access control for presentation) for the whole credential. Whereas sub-logics at attribute level would provide fine-grained validation of usage of credential attributes such as sharing maiden name of mother or authorizing sharing of car key to a friend for specific period of time.

As seen in figure 2, the action logics are in the form of compiled bytecodes (e.g., using WebAssemby or *Wasm*). In short, they take credential and reference parameters as input and generate the output. Action logics needs to understand the attribute request containing the type of requested action, associated inputs from the request and reference to the attached instance of the credential to successfully evaluate the action output.

Action logic can be developed in many high-level programing languages such as C, C++, RUST, GO Lang, TypeScript, etc. Converting these high-level code into portal formats such as WebAssembly enables cross platform execution of action logic across multi-platform wallet applications can run on.

Hereinafter, there are provided 2 enabling examples of credentials with embedded logic, the first one relating to a Personal Identification Data, PID, credential, and the second one relating to a payment credential.

Example of ISO mDL-formatted PID credential with embedded action logic:

```
 {
 version": "1.0",
  "documents": [
    {
      "docType": "",
      "issuerSigned": {
         "nameSpaces": {
          "eu.europa.ec.eudi.pid.1": [
             24(<< {
               "digestID": 0,
               "random":
               h'8798645B20EA200E19FFABAC92624BEE6AEC63ACEEDECFB1B80077D22BFC20E9
               "elementldentifier": "family_name",
               "elementValue": "Doe"
             } >>),
             24(<< {
               "digestID": 0,
               "random":
               h'8798645B20EA200E19FFABAC92624BEE6AEC63ACEEDECFB1B80077D22BFC20E9
               "elementldentifier": "given_name",
               "elementValue": "John"
             } >>)
           ]
         "eu.europa.ec.eudi.pid.action.1": [
          24(<< {
               "digestID": 0,
               "random":
               h'8798645B20EA200E19FFABAC92624BEE6AEC63ACEEDECFB1B80077D22BFC20E9
               "elementldentifier": "signActionCode",
               "elementValue": "base64actionLogicBytecode"
             } >>)
           ]
       }
       }
       "issuerAuth": []
     }
    ]
    
```

Example of W3C's VC-formatted payment credential with embedded action logic:

```
{
  "@context": ["https://www.w3.org/2018/credentials/v1", "https://schema.org/"]
  "id": "http://example.edu/credentials/332",
  "type": ["VerifiableCredential", "PaymentCredential"],
  "issuer": "https://example.edu/issuers/4",
  "issuanceDate": "2017-02-24T19:73:24Z",
  "actionLogic": {
   "actionCode"="_actionForWholeCredBase64...",
   "actionList"= {"*:(rightsToRequest)", "present:"}
   "version": "1.0.0",
   ["iban": {
     "actionCode"="_actionForAttributeLevelBase64",
     "actionList"= {"pay: ('transactionData')"}
     }
   ]
   }
  },
  "credentialSubject": {
   "name": "J. Doe",
   "iban": "123123124-342423",
   "expiryDate": "2050-03-15"
  },
  "proof": {
 }
 }
```

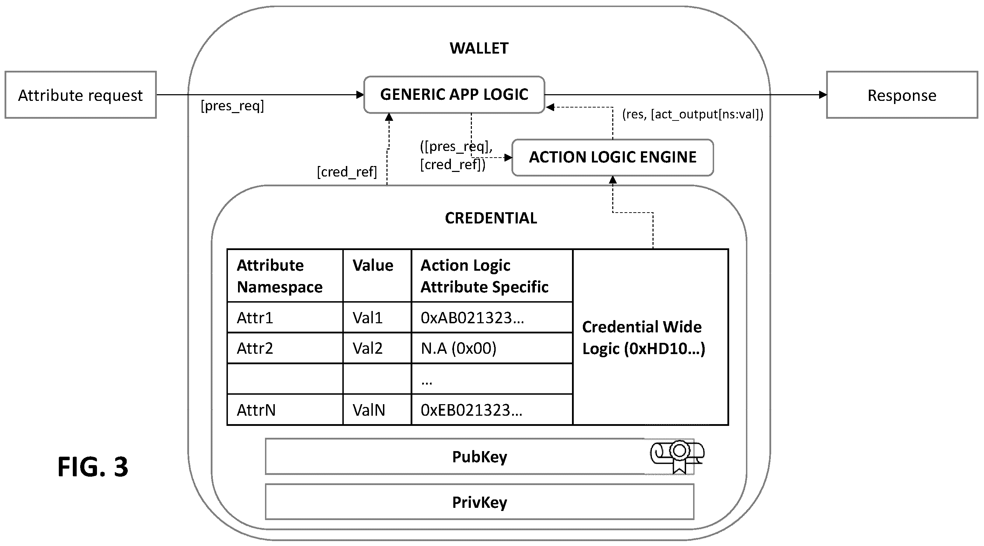

In **figure 3****,** it is depicted the enforcement of the allowed credential's actions by the wallet during a so-called credential presentation. The credential presentation is a well-known mechanism of using identity-related attributes enabling selective disclosure within a secure infrastructure. The widely adopted ones are mDL and W3C's VC. In short, a verifier requests the wallet's holder to disclose some holder's attributes and, after successfully performing device engagement (e.g., computing shared secrets for channel establishment), the verifier passes to the wallet an attribute request indicating the type of attribute it aims at knowing. The wallet checks which credentials store such type of attributes, and, if found, asks the holder for consent. Then, the wallet prepare an attribute presentation following the correct format and sends it to the verifier which can be either autonomously verify the user's attribute values or consult the issuer before enforcing its verifier's policies. The identity-related ecosystem, alike the payment or vehicle ones, are strongly marked by cryptography bringing then trust to every iteration in the workflow.

Therefore, figure 3 focusses on the "presentation" of a holder's personal attribute, but it can similarly address the opening of holder's car, or performing a payment transaction with holder's banking card.

When the presentation request on an attribute is initiated, the wallet finds the corresponding credential and executes its action logic. Namely, the wallet inputs at least part (or all) of the attribute request and the embedded logic to the wallet's action logic engine which determines if the at least one attribute stored in the credential can be used in response to the attribute request.

If successful, the wallet combines the output of the action logic with the regular data needed to prepare the response to the verifier.

To this end, the wallet comprises a generic app logic that determines, as per today, the overall treatment of the incoming requests; and an action logic engine that locally enforces the allowed actions of the overall credential and specific attributes. As depicted in figure 3, the parameter [pres_req] refer to the request from external entities (e.g., verifiers) requesting the specific action(s). The parameter "pres_req" would either be DocRequest (ISO mDL/mID), Presentation Request (W3C's VC), OIDC4VP Digital Credentials Query Language (DCQL) formatted request, etc. The second parameter [cred_ref] is a reference to the instance of the credential itself that is present in the wallet.

Thus, the generic app logic processes the incoming request [pres_req] from the requesting party (e.g., verifier) by looking up the credential, or specific attribute, from within the wallet [cred_ref], passes on (i.e., callback) the credential embedded logic to the action logic engine, gets back the output from the action logic engine (res, [act_output[ns:val]) and finally combines it with further data to deliver the response back to the requesting party. That is, generic app logic implements common behaviours across multiple credential such as processing of the Presentation Request on a credential, selective disclosure of attributes and preparation generic Presentation Response. In addition, the generic app logic advantageously invokes the action logic engine providing the Presentation Request and a reference to the associated credential in the wallet.

As for the action logic engine, it is the bytecode in charge of processing the request throughout the execution of a credential wide logic applying to the whole credential targeted by the request, and the execution of attribute-specific sub-logic applying to each attribute constitutive of the credential. In other words, action logic engine loads credential wide byte code and sub-logic bytecode at attribute level, execute those bytecodes with the parameters ([pres_req],[cred_ref]), and collects the results returned (res, [act_output[ns:val]) from the action logics to be merged with the final Presentation Response.

## Claims

1. A method for enforcing the usage of a credential by a wallet, wherein the credential is stored in the wallet and comprises embedded logic self-asserting its usage, wherein the method comprises:
• receiving, by the wallet, an attribute request indicating at least one attribute type and action to be performed by the wallet;
• retrieving, by the wallet, at least one attribute stored in the credential, and getting the associated embedded logic,
• inputting, by the wallet, at least part of the attribute request and the embedded logic to an action logic engine of the wallet, the action logic engine determining if the at least one attribute stored in the credential can be used in response to the attribute request; and
• if action is granted by the action logic engine, performing, by the wallet, the requested action with the requested attribute.

2. The method according to claim 1, wherein the embedded logic of the credential is set, and signed, by the credential issuer before onboarding into the wallet.

3. The method according to any of claim 1 or 2, wherein the embedded logic of the credential is a wide embedded logic self-asserting its usage at credential level, and the credential further comprises sub-logics at attribute level; the action logic engine being configured to interpret the wide embedded logic and the attributes-specific sub-logic against an attribute request.

4. The method according to any of claims 1 to 3, wherein the embedded logic, or the attribute-specific sub-logic, at least defines:
• the supported protocols such as ISO mDL, W3C Verifiable Credential, etc., or
• the supported transmission technologies such as Bluetooth Low Energy (BLE), Ultra-WideBand (UWB), or Near-Field Communication (NFC), etc., or
• the supported action: authentication, attribute presentation, transaction signing, unlock a door, start engine, etc.

5. The method according to any of claims 1 to 4, wherein the wallet is a multi-type credential wallet able to store identity-related credentials and non-identity credentials such as payment cards and car keys.

6. A wallet application installable into a host computer and configured to in turn store at least one credential, wherein the wallet comprises both a generic application logic setting generic rules such as how to access, retrieve, or transform the attribute credentials, and an action logic engine to enforce the embedded logic of the stored credentials upon receiving attribute requests.

7. A credential to be stored in a wallet application, and usable in the method of claim 1, wherein the credential comprises embedded logic self-asserting its usage set, and signed, by the credential issuer before being onboarded into the wallet.

8. **The** credential according to claim 7, wherein the embedded logic is a wide embedded logic self-asserting its usage at credential level, and further comprising sub-logics at attribute level.
